# EUROPEAN PATENT APPLICATION

(11) **EP 2 343 628 A2**
(43) Date of publication of application: **13.07.2011**
(21) Application number: 11150619.2
(22) Date of filing: 11.01.2011
(51) Int. Cl.: G06F 3/023

(54) **Method for inputting a character in a portable terminal**

(30) Priority: 11.01.2010 KR 20100002221
(71) Applicant: Samsung Electronics Co., Ltd., Seoul 442-742 (KR)
(72) Inventor: Kim, Ji-Hoon, 442-742, Gyeonggi-do (KR); Choi, Jin-Hee, 442-742, Gyeonggi-do (KR)
(74) Representative: Jenkins, Richard Gavin

(57) **Abstract**

Disclosed is a character input method, by which it is possible to input a character through one touch-and-drag action. The method includes displaying a predetermined character at a location of a cursor on a display area when a predetermined character is selected in a selection area, displaying a next selection area when the predetermined character has been input for at least a predetermined time, and moving the cursor to a next space and waiting for an input of a next character in the display area when a dragging to the next selection area is performed when the predetermined character has been input for at least the predetermined time.

## Description

### BACKGROUND OF THE INVENTION

### 1. Field of the Invention

The present invention relates generally to a method for inputting a character, and more particularly, to a character input method by which it is possible to input a character through one touch-and-drag action.

### 2. Description of the Related Art

In a portable terminal employing a touch device, a character can be input by a touch using a finger or a touch pen. However, keys are arranged identically to those of a conventional key input unit in the portable terminal including the touch device, so that in order to input a desired character, a user may be required to touch the keys several times.

Further, in a portable terminal including a QWERTY-type touch keypad for which both hands are used, the user may also be required to touch the keypad several times in order to input an English character. Therefore, when a character is input using a finger or a touch pen, a problem arises in that the finger or the touch pen must substantially move in a left and right direction and the user must touch a small area several times, creating a high probability of input errors.

### SUMMARY OF THE INVENTION

Accordingly, the present invention has been made to solve the above― stated problems occurring in the prior art, and the present invention provides a method for inputting a character, by which it is possible to input a character through one touch-and-drag action.

In accordance with an aspect of the present invention, there is provided a method for inputting a character, including displaying a predetermined character at a location of a cursor on a display area when the predetermined character is selected in a selection area, displaying a next selection area when the predetermined character has been input for at least a predetermined time, and moving the cursor to a next space and waiting for an input of a next character in the display area when a dragging to the next selection area is performed in a state in which the predetermined character has been input for at least the predetermined time.

Accordingly, the method for inputting the character of the present invention has an effect that it is possible to conveniently input the character through one touch-and-drag action in the up/down and left/right directions.

### BRIEF DESCRIPTION OF THE DRAWINGS

The above and other aspects, features and advantages of the present invention will be more apparent from the following detailed description taken in conjunction with the accompanying drawings, in which:
FIG. 1 illustrates components of a portable terminal according to an embodiment of the present invention;
FIGs. 2A and 2B illustrate a process for inputting a character in a portable terminal according to an embodiment of the present invention; and
FIGs. 3A through 3H illustrate the process of FIG. 2A.

### DETAILED DESCRIPTION OF EMBODIMENTS OF THE INVENTION

Hereinafter, embodiments of the present invention will be described with reference to the accompanying drawings. In the following description, the same elements will be designated by the same reference numerals although they are shown in different drawings. In the following description, a detailed description of known functions and configurations incorporated herein is omitted for the sake of clarity and conciseness.

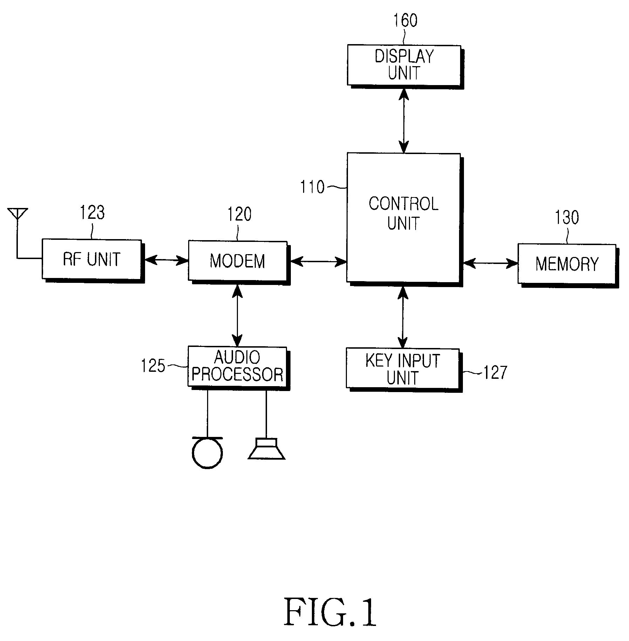

FIG. 1 illustrates components of a portable terminal according to an embodiment of the present invention.

Referring to FIG. 1, a Radio Frequency (RF) unit 123 performs a wireless communication function of the portable terminal. The RF unit 123 includes at least an RF transmitter (NOT SHOWN) for up-converting and amplifying frequency of a transmitted signal, and an RF receiver(NOT SHOWN) for low-noise amplifying a received signal and down-converting frequency. A modem 120 includes at least a transmitter(NOT SHOWN) for encoding and modulating the transmitted signal, and a receiver(NOT SHOWN) for demodulating and decoding the received signal. An audio processor 125 can include a codec, which has a data codec(NOT SHOWN) for processing a packet data, and an audio codec(NOT SHOWN) for processing an audio signal, such as voice. The audio processor 125 converts a digital audio signal received from the modem 120 into an analog signal through the audio codec, and reproduces the converted analog signal or converts an analog audio signal generated and transmitted from a microphone into a digital audio signal through the audio codec and transmits the converted audio signal to the modem 120. The codec can be separately included or included in a control unit 110.

A memory 130 includes program memory and data memory. The program memory stores programs for controlling a general operation of the portable terminal and programs for controlling an operation for inputting the character. The data memory temporarily stores data generated during the execution of the programs.

A display unit 160 displays a user's data output from the control unit 110. Further, the display unit 160 is implemented as a touch screen, so that it also functions as an input unit.

The display unit 160 displays a selection area and a display area in a character input mode. The selection area includes selectable characters and the display area displays a character selected in the selection area.

The display unit 160 sequentially displays multiple selection areas on location areas whenever a character is selected in the character input mode.

A key input unit 127 includes function keys for setting various functions. The control unit 110 controls the general operations of the portable terminal and may include the modem 120 and the codec.

Further, the control unit 110 controls the display unit 160 so as to display the selection area and the display area in the character input mode. When a predetermined character is selected in the selection area, the control unit 110 controls the display area so as to display the predetermined character at a location of a cursor.

When the selection area in which the characters are vertically arranged is displayed on the display unit 160, the control unit 110 controls the display unit 160 so as to display the character selected through a touch input or an upward and downward drag in the state in which the predetermined character has been input at the location of the cursor. Further, when the selection area in which the characters are horizontally arranged is displayed in the display unit 160, the control unit 110 controls the display unit 160 so as to display the character selected through a touch input or a left and right drag in the state in which the predetermined character has been input at the location of the cursor.

When the predetermined character has been input during at least a predetermined time in the selection area, the control unit 110 controls the display unit 160 so as to display a next selection area. Then, when the user drags to the next selection area in which the predetermined character has been input, the control unit 110 controls the display unit 160 so as to add the predetermined character to the display area, move the cursor of the display area to a next space, and wait for an input of a next character.

When the selection area in which the characters are vertically arranged is displayed on the display unit 160, the control unit 110 displays the next selection area on a right side of the selection area so as to allow a right dragging to the next selection area from the state in which the predetermined character has been input. Further, when the selection area in which the characters are horizontally arranged is displayed on the display unit 160, the control unit 110 displays the next selection area on a lower side of the selection area so as to allow a downward dragging to the next selection area from the state in which the predetermined character has been input.

When the dragging to the next selection area is performed and then again the dragging to the previous selection area is performed, the control unit 110 determines such a dragging as a cancel operation of the added character, so that the control unit 110 moves the cursor of the display area to a previous space and locates the cursor at the predetermined character. At this time, the control unit 110 can delete the next selection area from the display unit 160.

When the selection area in which the characters are vertically arranged is displayed on the display unit 160, the control unit 110 controls the display unit 160 so as to allow a dragging to the next selection area and then a left dragging to the previous selection area. When the selection area in which the characters are horizontally arranged is displayed on the display unit 160, the control unit 110 controls the display unit 160 so as to allow a dragging to the next selection area and then an upward dragging to the previous selection area.

When the cursor moves and is located at a corresponding character during the display of the characters on the display area, the control unit 110 displays a corresponding selection area in which the corresponding character has been selected on the display unit 160. When another character is selected in the corresponding selection area through the touch, the control unit 110 changes the corresponding character to the another character and displays the changed another character on the display area. Under the control of the control unit 110, the corresponding character is discriminated from other characters and displayed in the corresponding selection area when the corresponding selection area is displayed on the display unit 160.

Further, when the predetermined character has been input during at least a predetermined time in the selection area, the control unit 110 determines whether the selection area is located on the last location area among the multiple location areas for displaying the multiple selection areas on the display unit 160. When the selection area is located on the last location area, the control unit 110 controls the display unit 160 so as to display the selection area in a predetermined location area, except for the first area, among the multiple location areas of a next page. The predetermined location area may be located on the second location area for cancelling the added predetermined character. The control unit 110 controls the display unit 160 so as to display the next selection area on the third location area. Further, the control unit 110 can display a drag bar notifying the presence of multiple pages on a lower part of the display unit 160.

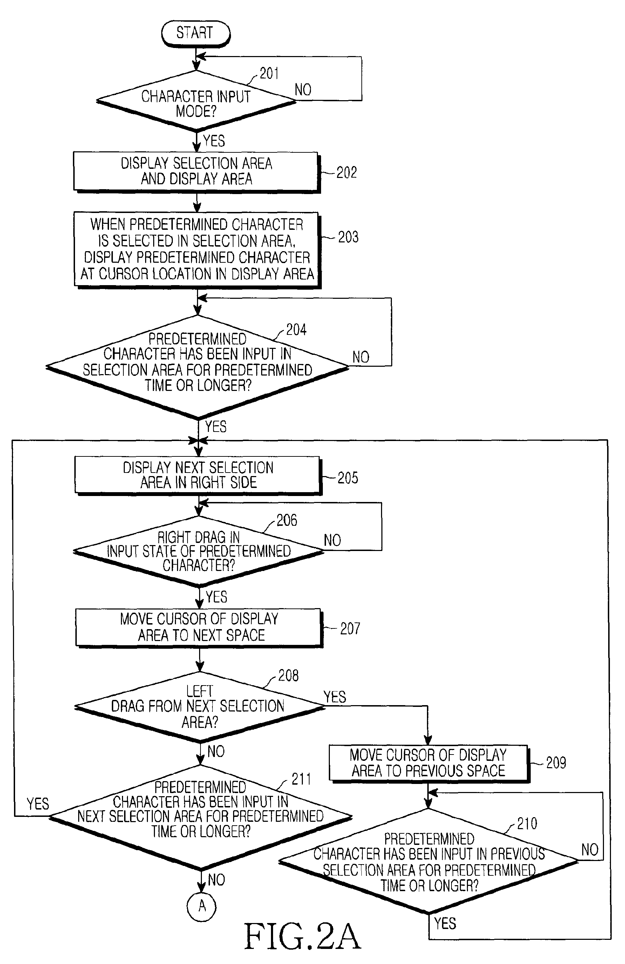

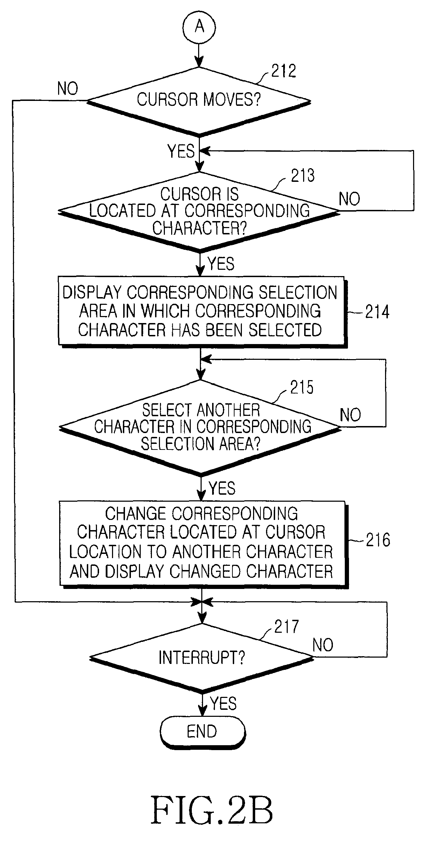

FIGs. 2A and 2B illustrate the process for inputting the character in the portable terminal according to an embodiment of the present invention. The embodiment of the present invention will be described with an example of the case in which the character is input through the selection area including vertically-arranged characters, and with reference to FIG. 2 together with FIG. 1 in detail.

Referring to FIGs. 2A to 2B, when the character input mode is selected in the portable terminal, the control unit 110 detects the selection of the character input mode in step 201 and proceeds to step 202 in which a selection area and a display area are displayed on the display unit 160.

In step 202, the control unit 110 displays the display area on an upper part of the display unit 160 and displays the selection area on the first location area among the multiple location areas for displaying the multiple selection areas.

At this time, the selection area includes the vertically arranged characters, so that the multiple location areas for displaying the multiple selection areas displayed by a line basis are sequentially arranged on the display unit 160 from the left toward the right side of the display unit 160.

When a predetermined character is selected by a touch in the selection area displayed on the first location area, the control unit 110 detects the touch and selection and displays the predetermined character selected by the touch at a location of the cursor on the display area in step 203.

In step 203, when all of the characters included in the selection area are not displayed, the user can select the predetermined character displayed through the upward and downward drag. Otherwise, when the user fails to correctly input the predetermined character, the user can select the predetermined character through the upward or downward drag in the state in which the predetermined character has been input.

Whenever a character is selected among the characters included in the selection area by the touch input or drag of the user, the selected character is displayed at the location of the cursor in the display area so that the user can recognize the character that the user currently selected.

When the predetermined character has been input during at least a predetermined time in step 203, the control unit 110 detects the input of the predetermined character in step 204 and displays a next selection area on a right side of the selection area displayed on the first location area, i.e. the second location area in step 205.

When the user drags in a right direction to the next selection area in the state in which the predetermined character has been input, the control unit 110 determines that the user has decided the input of the predetermined character in step 206. Then, the control unit 110 adds the predetermined character to the display area, moves the cursor to a next space of the predetermined character, and waits for an input of a next character in step 207.

In step 207, when the user drags again in a left direction from the next selection area to the selection area that is the previous selection area, the control unit 110 determines that the user cancels the input of the added predetermined character in step 208 and moves the cursor to the previous space, i.e. the location of the predetermined character, in the display area in step 209. At this time, the control unit 110 can delete the display of the next selection area from the display unit 160.

In step 209, when the user selects a predetermined character among the characters included in the selection area through the touch input again, the control unit 110 detects the touch input and selection and displays the selected predetermined character at the location of the cursor of the display area.

When the predetermined character has been input during at least a predetermined time, the control unit 110 detects the input in step 210 and proceeds to step 205 in which a next selection area is displayed on the right side of the selection area.

However, when the user inputs the predetermined character during at least a predetermined time in the next selection area in step 207, the control unit 110 detects the input in step 211 and proceeds to step 205 in which a next selection area is displayed on the right side of the next selection area.

When the user touches and selects a predetermined character on each of the selection areas displayed whenever the user inputs a single character through the repetition of steps 205 through 211, the present invention performs the input of the character while displaying the selected predetermined character on the display area.

During the repetition of steps 205 through 211, when the predetermined character has been input during at least a predetermined time in the corresponding selection area, the control unit 110 determines whether the selection area in which the predetermined character has been selected is located on the last location area among the multiple location areas. If it is determined that the selection area is located on the last location area among the multiple location areas, the control unit 110 turns a page. That is, the control unit 110 displays the selection area on the second location area among the multiple location areas of a next page and displays a next selection area on the third location area.

The selection area is located on the second location area for the canceling of the predetermined character added through the left drag, and a drag bar notifying the existence of the multiple pages can be displayed at the lower part of the display unit 160.

When the user moves the cursor during the display of the characters on the display area while repeating steps 205 through 211, the control unit 110 detects the movement of the cursor in step 212. When the cursor is located at the corresponding character among the characters displayed on the display area, the control unit 110 detects the location of the cursor in step 213 and displays the corresponding selection area in which the corresponding character has been selected in step 214.

In step 214, when the corresponding selection area is displayed on the display unit 160, under the control of the control unit 110, the corresponding character located at the location of the cursor is discriminated from other characters and displayed in the corresponding selection area.

In step 214, when the user selects another character in the corresponding selection area, the control unit 110 detects the selection of the another character in step 215 and changes the corresponding character located at the cursor to the another character and displays the changed another character in step 216.

Through the steps 212 to 216, whenever the cursor is located at the corresponding character among the characters displayed on the display area, the corresponding selection area in which the corresponding character has been selected is displayed, so that the user can change the characters displayed on the display area.

When the character input mode is completed during the execution of the character input mode, the control unit 110 detects the completion, interrupts the character input mode, and executes a corresponding function in step 217.

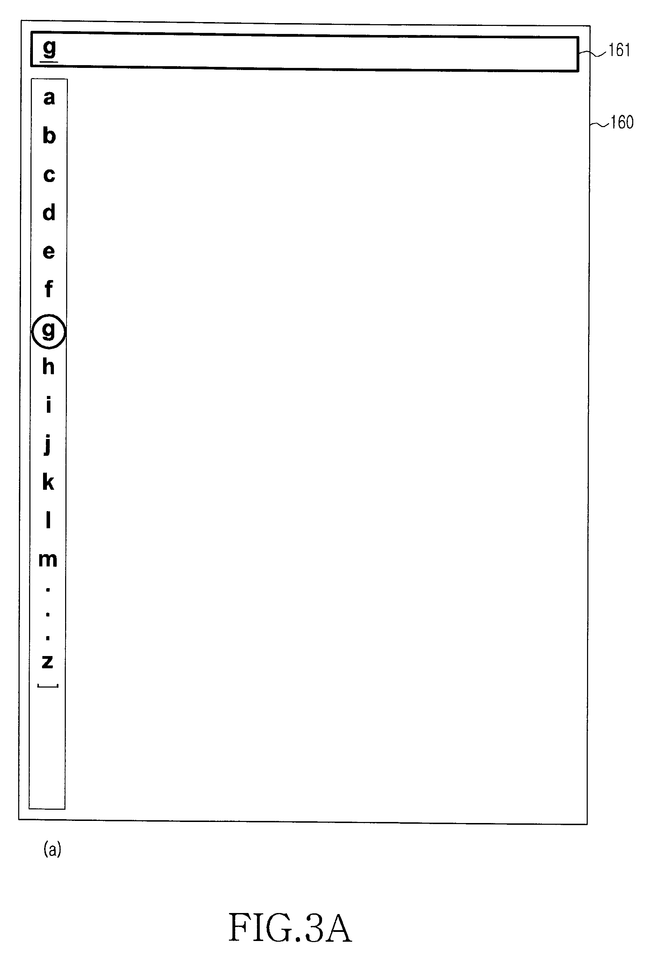

FIGs. 3A through 3H are views illustrating the process of inputting a sentence of "good bye" according to FIGs. 2A to 2B.

In the embodiment of the present invention, only the process for inputting an English word is described. However, the present invention can be applied to a process for inputting every character in which a single word is formed by the combination of syllables, such as an English word, as well as a number and the Latin language.

FIG. 3A illustrates the display unit displaying the display area 161 and the first location area (a) among the multiple vertical location areas (a) through (h).

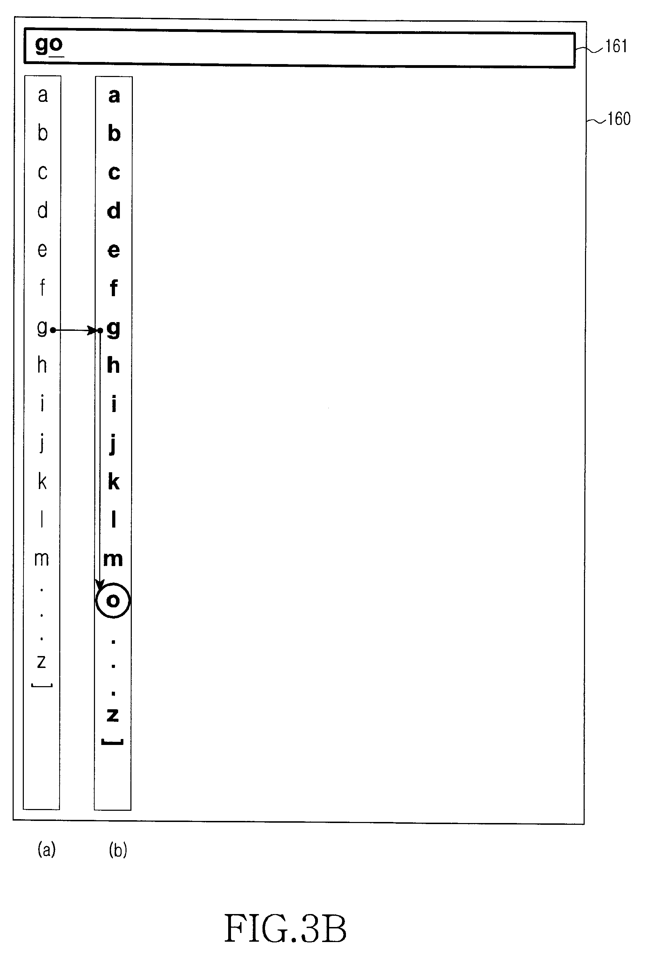

In FIG. 3A, when the letter "g" among alphabet letters displayed on the selection area is touched and input, the letter "g" is displayed at the location of the cursor of the display area 161 and a next selection area is displayed on the right second location area (b) as shown in FIG. 3B.

When a dragging to the next selection area displayed on the second location area (b) is performed in a state in which the letter "g" has been input during the predetermined time or longer, the letter "g" is added to the display area and the cursor moves to a next space and waits for an input of a next character.

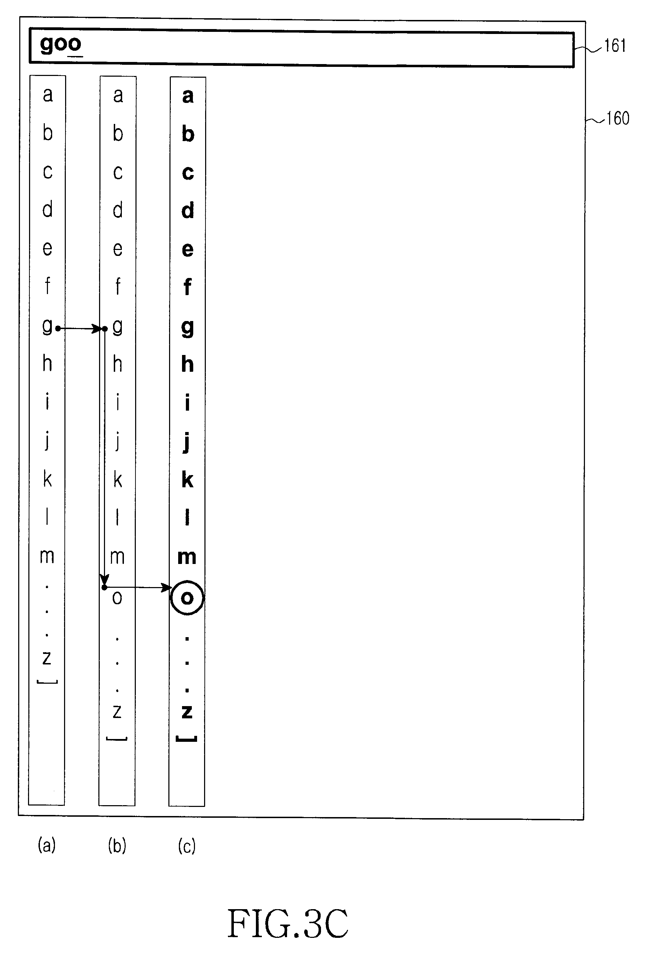

When the letter "o" is touched and input on the next selection area displayed on the second location area (b) or the touch is input at the location of the letter "g" and then a downward dragging is performed in a state in which the letter "g" has been input, the letter "o" is displayed at the location of the cursor on the display area 161 and a next selection area is displayed on the right third location area (c) as shown in FIG. 3C.

When a dragging to the next selection area displayed on the third location area (c) is performed in a state in which the letter "o" has been input for the predetermined time or longer, the letter "o" is added to the display area and the cursor moves to a next space and waits for an input of a next character.

FIG. 3C illustrates the operation in which the letter "o" is input on the selection area displayed on the third location area (c) and displayed on the display area through the above operation.

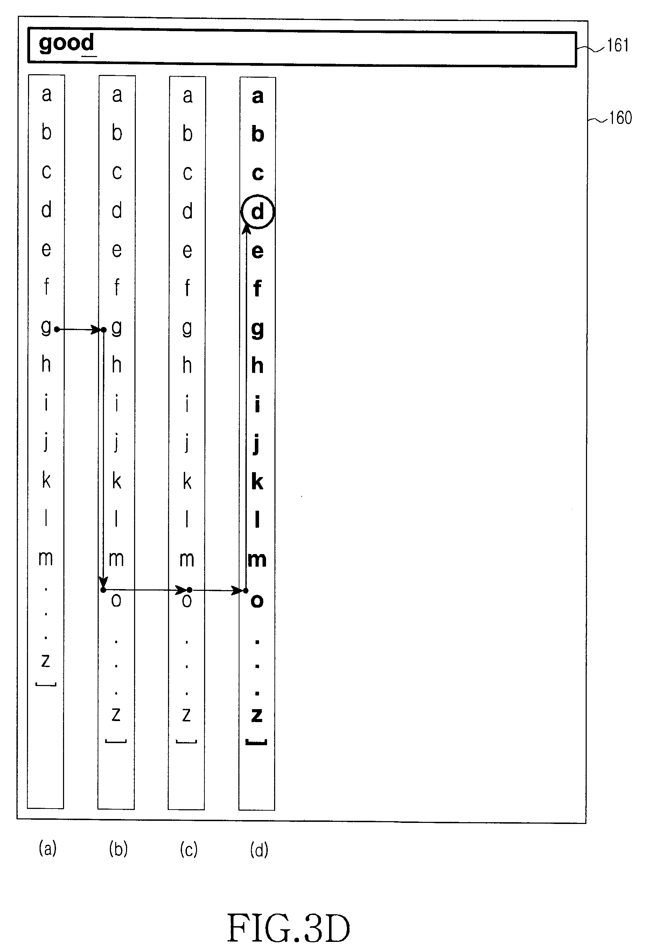

FIG. 3D illustrates the operation in which the letter "d" is input in a selection area displayed on the fourth location area (d) and displayed on the display area through the above operation.

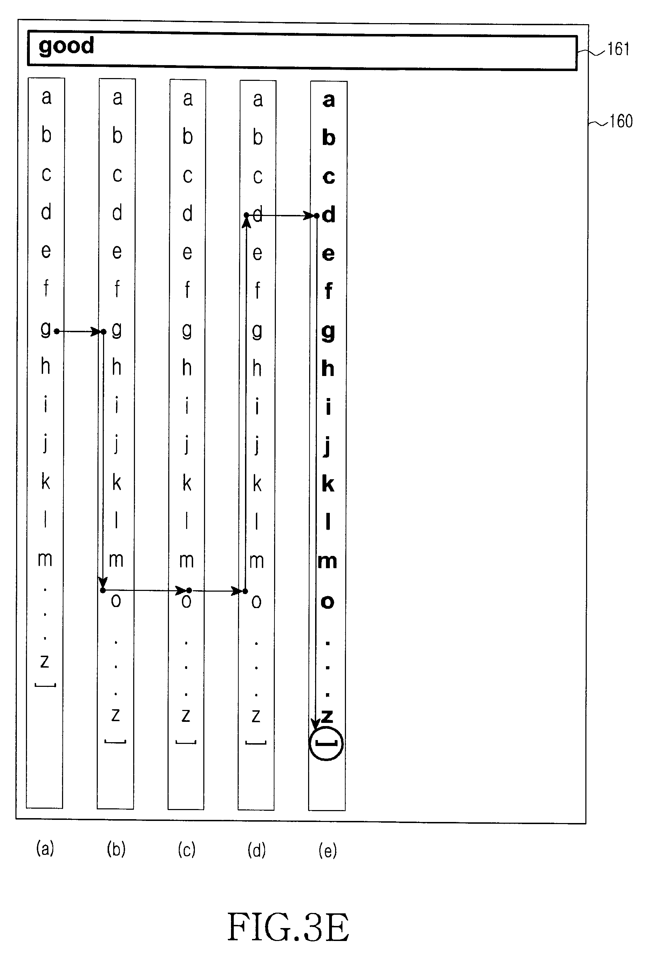

FIG. 3E illustrates the operation in which a special character for spacing one space is input on a selection area displayed on the fifth location area (e) so that the cursor spaces one space and moves to a next space on the display area.

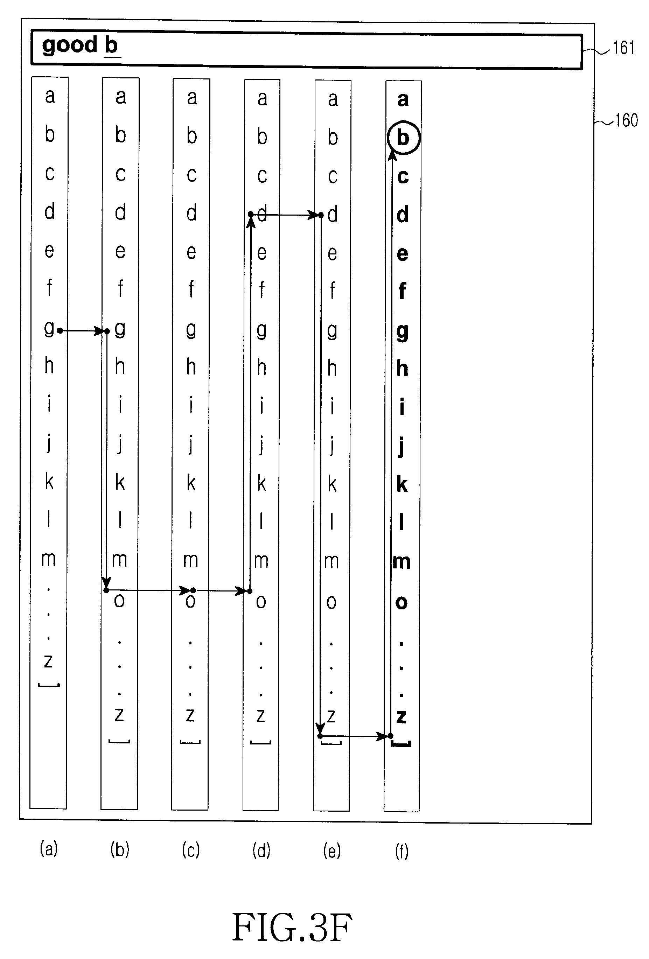

FIG. 3F illustrates the operation in which the letter "b" is input on a selection area displayed on the sixth location area (f) and displayed on the display area through the above operation.

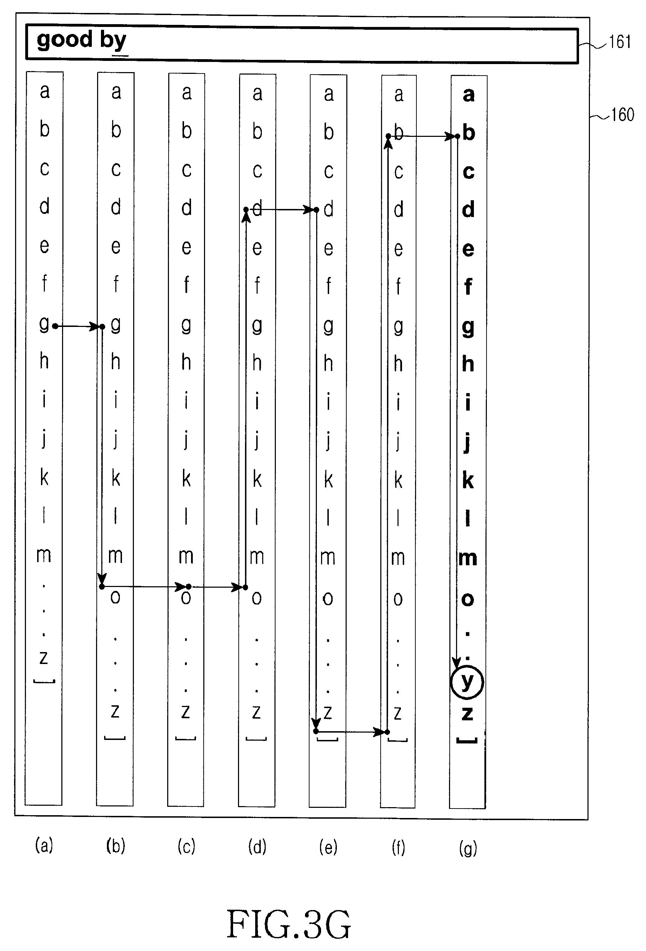

FIG. 3G illustrates the operation in which the letter "y" is input on a selection area displayed on the seventh location area (g) and displayed on the display area through the above operation.

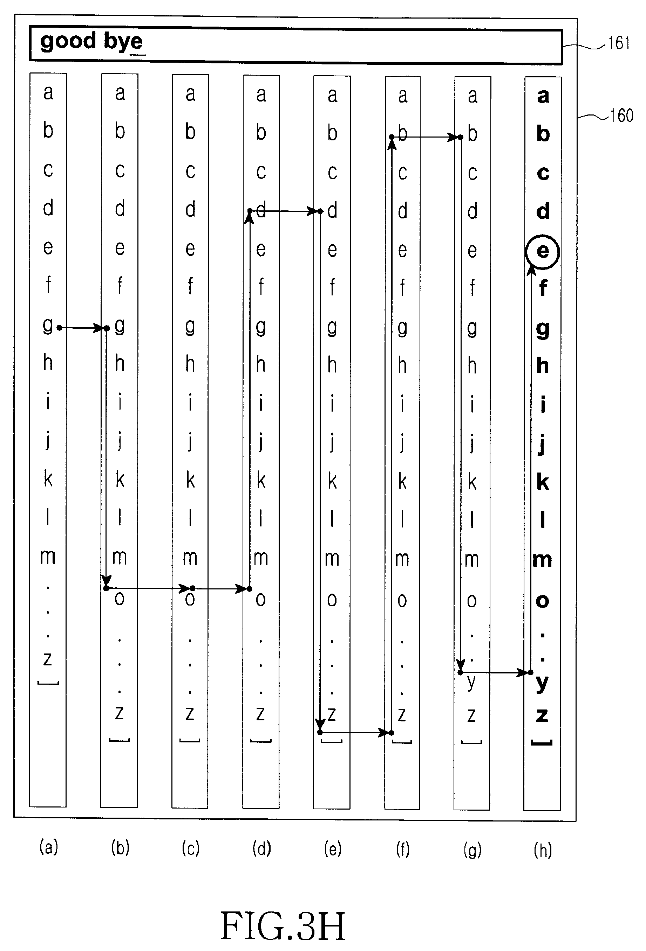

FIG. 3H illustrates the operation in which the letter "e" is input on a selection area displayed on the eighth location area (h) and displayed on the display area through the above operation.

Further, according to an embodiment of the present invention, the multiple selection areas in which the characters are horizontally arranged are sequentially displayed on the display unit from the upper side in the lower direction of the display unit whenever the character is input and the display area is displayed on the upper part or the lower part of the display unit, so as to input the character.

The selection area includes the horizontally arranged characters, so that the multiple location areas for displaying the multiple selection areas displayed in a column unit are sequentially arranged on the display unit 160 from the upper side in the lower direction of the display unit 160.

When the multiple selection areas in which the characters are horizontally arranged are sequentially displayed on the display unit, the user selects the predetermined character in the corresponding selection area through the right and left drag, downward drags from the current selection area to the next selection area so as to add the predetermined character, and upward drags from the next selection area to the previous selection area so as to cancel the added character, thereby inputting the character.

While the present invention has been shown and described with reference to certain embodiments and drawings of the portable terminal, it will be understood by those skilled in the art that various changes in form and details may be made therein without departing from the spirit and scope of the invention as defined by the appended claims.

## Claims

1. A method for inputting a character in a portable terminal, the method comprising the steps of:
displaying a predetermined character at a location of a cursor on a display area of a display unit of the portable terminal, when the predetermined character is selected in a selection area;
displaying a next selection area on the display area of the portable terminal, when the predetermined character has been input for at least a predetermined time; and
moving the cursor to a next space and waiting for an input of a next character in the display area, when a dragging to the next selection area is performed when the predetermined character has been input for at least the predetermined time.

2. The method as claimed in claim 1, further comprising displaying the selection area, which includes selectable characters, and the display area, which displays a character selected from the selection area, on the display unit, when a character input mode is selected.

3. The method as claimed in claim 1, further comprising moving the cursor to a previous space and locating the cursor at a location of the predetermined character on the display area, when a dragging to a previous selection area is performed after the dragging to the next selection area has been performed.

4. The method as claimed in claim 3, wherein the next selection area is deleted from the display unit when the dragging to the previous selection area is performed.

5. The method as claimed in claim 1, further comprising the steps of:
displaying a corresponding selection area in which a corresponding character has been selected, when the cursor moves and is located at a location of the corresponding character during the display of the characters in the display area; and
changing the corresponding character located at the location of the cursor in the display area to another character and displaying the changed another character, when the another character is selected in the corresponding selection area.

6. The method as claimed in claim 5, wherein the corresponding character is displayed in a manner that discriminates the corresponding character from other characters in the corresponding selection area.

7. The method as claimed in claim 1, wherein the step of displaying the next selection area comprises the steps of:
determining whether the selection area is located on a last location area among multiple vertical location areas for displaying multiple selection areas on the display unit, when the predetermined character has been input during at least the predetermined time; and
displaying the selection area on a predetermined location area, except for a first location area among the multiple vertical location areas, when the selection area is located on the last location area, and displaying the next selection area on a next location area that is next to the location area in which the selection area is located.

8. The method as claimed in claim 7, wherein the predetermined location area except for the first location area corresponds to a second location area among the multiple vertical location areas.

9. The method as claimed in claim 1, wherein when the selection area includes vertically arranged characters, the method comprises the steps of:
displaying the predetermined character at a location of the cursor on the display area when the predetermined character is selected in the selection area;
displaying the next selection area on a right side of the selection area when the predetermined character has been input during at least the predetermined time;
moving the cursor to a next space and waiting for an input of a next character on the display area when a right dragging to the next selection is performed in a state in which the predetermined character has been input during at least the predetermined time; and
moving the cursor to a previous space and locating the cursor at the location of the predetermined character on the display area when a left dragging to the selection area is performed after the dragging to the next selection area has been performed.

10. The method as claimed in claim 9, wherein the predetermined character is selected through a touch input or an upward and downward drag in a state in which the predetermined character has been input on the selection area.

11. The method as claimed in claim 1, wherein when the selection area includes horizontally arranged characters, the method comprises the steps of:
displaying the predetermined character at a location of a cursor on the display area when the predetermined character is selected in the selection area;
displaying the next selection area on a lower side of the selection area when the predetermined character has been input during at least the predetermined time;
moving the cursor to a next space and waiting for an input of a next character on the display area, when a downward dragging to the next selection is performed in a state in which the predetermined character has been input during at least the predetermined time; and
moving the cursor to a previous space and locating the cursor at the location of the predetermined character on the display area when an upward dragging to the selection area is performed after the dragging to the next selection area has been performed.

12. The method as claimed in claim 11, wherein the predetermined character is selected through a touch input or a left and right drag in a state in which the predetermined character has been input on the selection area.
